(19) Europäisches Patentamt
European Patent Office
Office européen des brevets

(11) Numéro de publication: 0 239 444 A1

(12) # DEMANDE DE BREVET EUROPEEN

(21) Numéro de dépôt: **87400404.7**

(22) Date de dépôt: **24.02.87**

(51) Int. Cl.[4]: **C 09 K 19/20**, C 09 K 19/02

(30) Priorité: **28.02.86 FR 8602879**

(43) Date de publication de la demande: **30.09.87 Bulletin 87/40**

(84) Etats contractants désignés: **DE GB NL**

(71) Demandeur: **THOMSON-CSF, 173, Boulevard Haussmann, F-75379 Paris Cédex 08 (FR)**

(72) Inventeur: **Decobert, Guy, THOMSON-CSF§SCPI§19, avenue de Messine, F-75008 Paris (FR)**
Inventeur: **Dubois, Jean-Claude, THOMSON-CSF§SCPI§19, avenue de Messine, F-75008 Paris (FR)**
Inventeur: **Soyer, Françoise, THOMSON-CSF§SCPI§19, avenue de Messine, F-75008 Paris (FR)**

(74) Mandataire: **Lepercque, Jean et al, THOMSON-CSF SCPI 19, avenue de Messine, F-75008 Paris (FR)**

(54) **Cristal liquide ferroélectrique, son procédé de fabrication et son utilisation dans un mélange de cristaux liquides.**

(57) L'invention concerne una famille de composés organiques présentant une phase mésomorphe de type smectique C chiral et une polarisation élevée. L'invention concerne également des mélanges obtenus à partir de ces composés organiques.

Le composé selon l'invention répond à la formule chimique générale suivante:

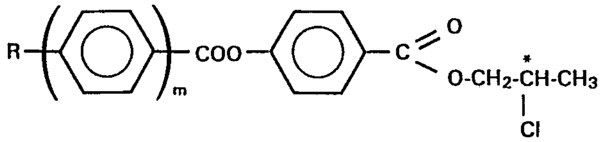

pour laquelle R = $C_n H_{2n+1}$ O avec $1 \leqslant n \leqslant 14$ et m = 1 ou 2.

EP 0 239 444 A1

# CRISTAL LIQUIDE FERROELECTRIQUE, SON PROCEDE DE FABRICATION ET SON UTILISATION DANS UN MELANGE DE CRISTAUX LIQUIDES.

La présente invention concerne une famille de composés organiques présentant une phase mésomorphe de type smectique C chiral et une polarisation élevée. L'invention concerne également les mélanges de cristaux liquides obtenus à partir de ces composés. L'invention concerne enfin le procédé de fabrication des molécules de cette famille. Ces composés peuvent être utilisés dans des dispositifs de visualisation utilisant les cristaux liquides ferroélectriques tels que les commutateurs en optoélectronique, les dispositifs de visualisation à mémoire et à haute définition.

Les cristaux liquides occupent à ce jour une place importante dans le domaine des dispositifs de visualisation. Ceci est dû en particulier à leur simplicité de mise en oeuvre et à la faible consommation de l'effet électrooptique appelé nématique en hélice. Cependant, le principal inconvénient de ce type de matériau est son faible taux de multiplexage (de l'ordre d'une centaine), ce qui représente un problème majeur pour l'application aux dispositifs à haute définition qui exigent des taux de multiplexage très élevés. Diverses solutions ont été proposées pour tenter de remédier à cet inconvénient. Parmi celles-ci, on peut mentionner les cristaux liquides possédant un effet électrooptique à mémoire (smectique A ou C*) pour lesquels le taux de multiplexage est théoriquement infini.

Les effets électrooptiques rapides observés dans les cristaux liquides ferroélectriques (smectiques C* et autres phases tiltées) offrent une solution intéressante aux problèmes des effets à mémoire intrinsèque. Il a été montré que l'on pouvait obtenir un effet électrooptique par retournement de la polarisation de domaines ferroélectriques dans des phases smectiques ferroélectriques. Il est connu de la demande de brevet européen 0 032 362 que, pour des cellules de faible épaisseur (2 $\mu$), il est possible d'induire deux directions stables d'axes optiques distincts et de polarisations

opposées. La commutation entre ces deux directions se fait par application d'un champ électrique continu approprié. Les cellules ainsi constituées sont des systèmes bistables, donc à mémoire, possédant de faibles temps de réponse et présentant une faible consommation d'énergie. Pour pallier l'inconvénient constitué par la très faible épaisseur des cellules, la demande de brevet FR 2 557 719 a proposé de maintenir les états stables, qui sont induits dans la couche de cristal liquide ferroélectrique par un champ électrique continu, non par des contraintes d'épaisseur et d'ancrage, mais par un champ alternatif de blocage. Il est alors possible d'obtenir un verrouillage sous champ alternatif pour des épaisseurs de cellule relativement fortes (de 10 à 15 $\mu$), ce qui permet d'obtenir une mémoire entretenue et des taux élevés de multiplexage d'écrans matriciels.

Ces dispositifs nécessitent des matériaux à polarisation élevée puisque le retournement se fait par un couplage linéaire entre la polarisation et le champ électrique continu. Le matériau utilisé dans la demande de brevet citée FR 2 557 719 doit en outre posséder une anisotropie diélectrique négative. Cette condition peut être réalisée en mettant des dipôles perpendiculairement à l'axe de la molécule. Deux moyens sont actuellement connus pour obtenir des composés à polarisation élevée. Le premier consiste à fixer le carbone asymétrique le plus près possible du cœur mésogène, le deuxième à synthétiser des molécules portant un fort moment dipolaire sur le carbone asymétrique. Il existe peu de composés pour lesquels le carbone asymétrique est porteur d'un groupement à fort moment dipolaire. On peut citer le p-hexyloxybenzylidène p'-amino 2 chloro $\alpha$-propylcinnamate (HOBACPC) qui possède la formule chimique suivante :

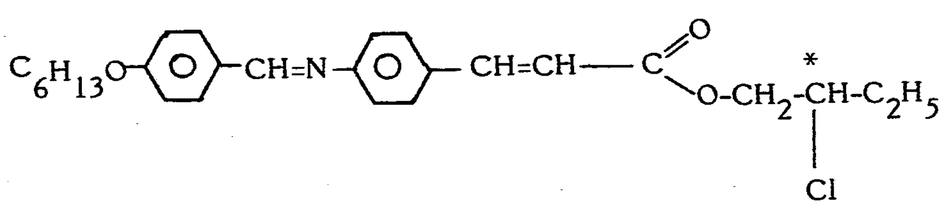

Ce composé possède le diagramme de transitions de phases suivant :

$$K \underset{}{\overset{60°C}{\rightleftharpoons}} S^*_H \overset{64°C}{\rightleftharpoons} S^*_C \overset{78°C}{\rightleftharpoons} S_A \overset{113°C}{\rightleftharpoons} I$$

Ce composé appartient à une famille qui possède de nombreux inconvénients. En particulier, à cause de la double liaison carbone-carbone (C=C) et du groupe azométhine (-CH=N-), ces produits sont peu stables lorsqu'ils sont exposés trop longtemps à la lumière ou en milieu humide.

Afin de pallier ces inconvénients, l'invention propose des composés chimiquement stables, possédant un atome de chlore relié à l'atome de carbone asymétrique. Ces composés présentent des phases smectiques C chirales monotropes et il est possible de les utiliser avantageusement en mélange avec d'autres cristaux liquides ferroélectriques dans des dispositifs de visualisation à mémoire et à accès matriciel utilisant ce type de matériaux.

Les composés selon l'invention présentent également l'avantage d'avoir une phase smectique A à une température plus élevée que la phase smectique C chirale, ce qui leur donne l'avantage de s'aligner plus facilement.

L'invention a donc pour objet un cristal liquide ferroélectrique présentant au moins une phase mésomorphe de type smectique C chiral, caractérisé en ce qu'il répond à la formule chimique générale :

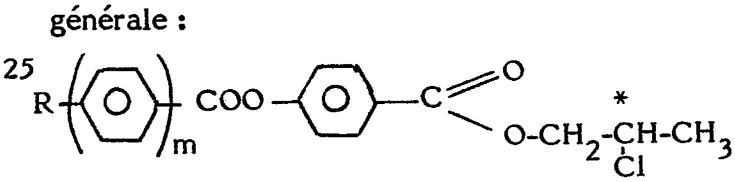

pour laquelle R = $C_n H_{2n+1} O$ avec $1 \leqslant n \leqslant 14$ et m = 1 ou 2.

L'invention concerne également les mélanges de cristaux liquides comprenant au moins un cristal liquide ferroélectrique dont la formule est donnée ci-dessus.

L'invention concerne enfin le procédé de fabrication d'un tel cristal liquide.

L'invention sera mieux comprise et d'autres avantages

apparaîtront au moyen de la description qui va suivre et des figures annexées parmi lesquelles :

- la figure 1 est un tableau regroupant les températures de transitions de phases de certains composés selon l'invention,

- la figure 2 représente également les transitions de phases des mêmes composés,

- la figure 3 est un diagramme de phases d'un mélange binaire,

- la figure 4 regroupe la formule chimique et le diagramme de phases d'un composé organique de l'art connu.

La description portera sur le procédé général de synthèse des molécules selon l'invention ainsi que sur les propriétés mésomorphes des cristaux liquides correspondants. Deux exemples de synthèse de molécules compléteront la description.

<u>PROCEDE GENERAL DE SYNTHESE</u>.

Les composés organiques selon l'invention peuvent être obtenus en 5 étapes selon le schéma réactionnel suivant :

<u>1ère étape</u> : Synthèse du R(+) chloro 2 propanoate d'éthyle par action du pentafluorure de phosphore sur le S(-) lactate d'éthyle.

<u>2ème étape</u> : Synthèse du R(-) chloro 2 propanol par action de l'hydrure double de lithium et d'aluminium sur le produit obtenu à la première étape.

<u>3ème étape</u> : Synthèse du 4 hydroxybenzoate de R(-) chloro 2 propyle par action du composé obtenu à la deuxième étape sur l'acide 4 hydroxybenzoïque en utilisant une catalyse acide.

<u>4ème étape</u> : Chloruration de l'acide 4n (alkyloxy ou alkyloxyphényl) benzoïque par action du chlorure de thionyle ou d'oxalyle. Ceci a déjà été décrit dans la demande de brevet FR 2 567 877.

<u>5ème étape</u> : Synthèse du [4n alkyloxy ou alkyloxyphényl] benzoate de R(-) chloro 2 propyloxyphényle par réaction entre les produits obtenus à l'issue des troisième et quatrième étapes.

Le mode opératoire qui vient d'être décrit est valable quelles que soient les valeurs des paramètres m et n pourvu que l'on respecte les proportions molaires.

Les composés selon l'invention répondent aux dénominations suivantes :

4 méthyloxybenzoate de R(-) chloro 2 propyloxyphényle
4 éthyloxybenzoate de R(-) chloro 2 propyloxyphényle
4 propyloxybenzoate de R(-) chloro 2 propyloxyphényle
4 butyloxybenzoate de R(-) chloro 2 propyloxyphényle
4 pentyloxybenzoate de R(-) chloro 2 propyloxyphényle
4 hexyloxybenzoate de R(-) chloro 2 propyloxyphényle
4 heptyloxybenzoate de R(-) chloro 2 propyloxyphényle
4 octyloxybenzoate de R(-) chloro 2 propyloxyphényle
4 nonyloxybenzoate de R(-) chloro 2 propyloxyphényle
4 décyloxybenzoate de R(-) chloro 2 propyloxyphényle
4 undécyloxybenzoate de R(-) chloro 2 propyloxyphényle
4 dodécyloxybenzoate de R(-) chloro 2 propyloxyphényle
4 tridécyloxybenzoate de R(-) chloro 2 propyloxyphényle
4 tétradécyloxybenzoate de R(-) chloro 2 propyloxyphényle
4 méthyloxyphénylbenzoate de R(-) chloro 2 propyloxyphényle
4 éthyloxyphénylbenzoate de R(-) chloro 2 propyloxyphényle
4 propyloxyphénylbenzoate de R(-) chloro 2 propyloxyphényle
4 butyloxyphénylbenzoate de R(-) chloro 2 propyloxyphényle
4 pentyloxyphénylbenzoate de R(-) chloro 2 propyloxyphényle
4 hexyloxyphénylbenzoate de R(-) chloro 2 propyloxyphényle
4 heptyloxyphénylbenzoate de R(-) chloro 2 propyloxyphényle
4 octyloxyphénylbenzoate de R(-) chloro 2 propyloxyphényle
4 nonyloxyphénylbenzoate de R(-) chloro 2 propyloxyphényle
4 décyloxyphénylbenzoate de R(-) chloro 2 propyloxyphényle
4 undécyloxyphénylbenzoate de R(-) chloro 2 propyloxyphényle
4 dodécyloxyphénylbenzoate de R(-) chloro 2 propyloxyphényle
4 tridécyloxyphénylbenzoate de R(-) chloro 2 propyloxyphényle
4 tétradécyloxyphénylbenzoate de R(-) chloro 2 propyloxyphényle

Exemple 1.

Préparation du 4 décyloxybenzoate de R(-) chloro 2 propyloxyphényle.

Réaction 1 : 12 g de S(-) lactate d'éthyle dissous dans 8 g de pyridine sont ajoutés goutte à goutte à 42 g de pentachlorure de phosphore. Une hydrolyse ménagée à la glace pilée suivie d'une extraction à l'éther permet d'isoler les produits de réaction. Le résidu est distillé

à pression ordinaire. On obtient 6 g de R(+) chloro 2 propanoate d'éthyle. Le rendement de l'opération est de 44 %.

Réaction 2 : A 8 g d'hydrure double de lithium et d'aluminium dissous dans 210 ml d'éther sont ajoutés lentement 49 g du chloro 2 propanoate d'éthyle obtenu à l'étape précédente. Le mélange réactionnel obtenu est alors agité pendant 30 mn. Après hydrolyse par une solution d'acide sulfurique à 10 %, la phase éthérée est séparée et la phase aqueuse est extraite plusieurs fois à l'éther. La phase éthérée est séchée sur du sulfate de magnésium. Le résidu est distillé à environ 51°C sous une pression de 30 mm de mercure. On obtient 29 g de R(-) chloro 2 propanol. Le rendement de l'opération est de 77 %.

Réaction 3 : 0,023 mole d'acide parahydroxybenzoïque, 0,03 mole de R(-) chloro 2 propanol et 0,15 $cm^3$ d'acide sulfurique sont ajoutés à 14 $cm^3$ de benzène. Le mélange est mis 24 heures au reflux. Le milieu est ensuite refroidi puis est ajouté à une solution d'eau et de glace pilée. Le milieu organique est extrait au benzène et séché sur du sulfate de magnésium. Les extraits benzéniques sont évaporés et le brut est directement utilisable pour la réaction 5.

Réaction 4 : l'acide 4 décyloxybenzoïque est transformé en chlorure d'acide par traitement à reflux pendant deux heures dú chlorure de thionyle. L'excès de chlorure de thionyle est éliminé sous vide et le résidu est mis en solution dans une solution de toluène.

Réaction 5 : cette réaction consiste à faire réagir le chlorure d'acide obtenu à la réaction 4 et l'alcool de la réaction 3. 0,012 mole de chlorure d'acide, 0,11 mole d'alcool et 50 ml de pyridine sont chauffés pendant deux heures à reflux. Le mélange réactionnel est versé dans une solution d'eau et d'acide sulfurique (150 ml d'eau pour 34 ml d'acide). Les phases éthérées sont lavées à l'eau et séchées. Le dérivé final est purifié par chromatographie sur silice avec comme éluant l'hexane et le toluène (dans une proportion de 50/50).

Exemple 2.

Préparation du 4 octyloxyphénylbenzoate de R(-) chloro 2 propyloxyphényle.

Le 4 hydroxybenzoate de R(-) chloro 2 propyle est synthétisé

de la même façon que dans l'exemple 1. La réaction finale consiste à faire réagir le chlorure de l'acide 4 octyloxyphénylbenzoïque sur l'alcool précédemment cité.

PROPRIETES DES CORPS SYNTHETISES.

Le tableau de la figure 1 rassemble les résultats de l'étude calorimétrique et microscopique effectuée sur quelques composés selon l'invention référencés A1, A2 et A3. Dans ce tableau, les lettres K, $S_3$, $S^*_C$, $S_A$ et I désignent respectivement les phases cristalline, smectique ordonné à structure encore indéterminée, smectique C chirale, smectique A et isotrope. Une croix située sous l'une de ces lettres indique l'existence de la phase considérée ; un tiret indique son absence. Quand une transition de phase a lieu, sa température exprimée en degrés Celsius est indiquée à droite de la croix. Les crochets indiquent que la phase considérée est monotrope c'est-à-dire qu'elle n'apparaît qu'en refroidissant le composé. Le tableau mentionne également les valeurs de m et n des composés étudiés ainsi que le point de fusion mp en degrés Celsius. La nature des mésophases a été déterminée par l'étude au microscope optique de l'isomorphisme des composés.

A la figure 2, on a donné une autre représentation des transitions de phases des composés A1, A2 et A3. Cette représentation donne un meilleur aperçu des plages mésomorphiques que le tableau de la figure 1, en particulier en fonction de l'évolution croissante ou décroissante de la température.

Les figures 1 et 2 montrent bien la présence de phases cristallines liquides. Les composés possèdent une structure chirale due à la présence d'un atome de carbone asymétrique. La fixation d'un atome de chlore sur ce carbone asymétrique confère à la molécule une polarisation élevée que le composé soit utilisé pur ou en mélange. Les composés selon l'invention seront avantageusement utilisés en mélange avec un ou plusieurs cristaux liquides présentant une large gamme smectique C chirale mais une faible polarisation. Le mélange obtenu présentera alors à la fois une large gamme smectique C chirale et une polarisation satisfaisante. La proportion de composé selon l'invention dans le mélange peut être de l'ordre de

5 à 10 %. Il joue le rôle d'un dopant pour ce mélange.

A titre d'exemple, le diagramme de phases de la figure 3 correspond à un mélange binaire du composé selon l'invention référencé $A_2$ avec un composé B à large gamme smectique C chirale, le p-décyloxybenzoate de (+)3 méthylhexyloxyphényle dont la formule et les diagrammes de phases sont représentés à la figure 4. Le premier diagramme de phases a été tracé pour des températures croissantes et le second pour des températures décroissantes. Toutes ces températures sont exprimées en degrés Celcius. Lors de la montée en température, le composé B passe successivement de la phase cristalline aux phases smectique C chirale, smectique A, cholestérique et isotrope. On peut remarquer que la plage smectique C chirale est large (35°C) et qu'elle existe pour des températures relativement basses. Au refroidissement, le composé B ne passe plus directement de la phase smectique C chirale à la phase cristalline. A 30°C, il passe à une phase $S_3$.

Pour le diagramme de la figure 3, les axes des ordonnées représentent la température en degrés Celsius et l'axe des abscisses représente le pourcentage de composé $A_2$ présent dans un mélange de composés B et $A_2$. La zone hachurée du diagramme représente une zone stable en phase smectique C chirale. On peut remarquer que c'est pour de faibles concentrations de composé $A_2$ que la gamme smectique C chirale est la plus large, le maximum étant situé vers 11 %. Un tel mélange présente des températures de transition de phase bien déterminées. Il a comme avantage de disposer d'une large plage smectique C chirale pour des températures relativement basses et d'avoir en même temps une polarisation élevée.

REVENDICATIONS.

1. Cristal liquide ferroélectrique présentant au moins une phase mésomorphe de type smectique C chiral, caractérisé en ce qu'il répond à la formule chimique générale :

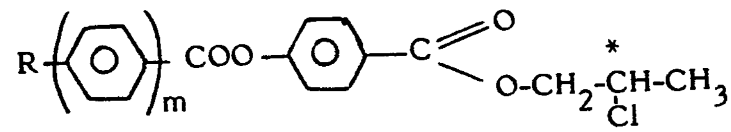

pour laquelle R = $C_n H_{2n+1} O$ avec $1 \leqslant n \leqslant 14$ et m = 1 ou 2.

2. Cristal liquide selon la revendication 1, caractérisé en ce que m vaut 1 et n vaut 10.

3. Cristal liquide selon la revendication 1, caractérisé en ce que m vaut 2 et n vaut 8.

4. Cristal liquide selon la revendication 1, caractérisé en ce que m vaut 2 et n vaut 6.

5. Mélange de cristaux liquides, caractérisé en ce qu'il comprend au moins un cristal liquide ferroélectrique selon l'une quelconque des revendications 1 à 4.

6. Procédé de fabrication d'un cristal liquide ferroélectrique selon l'une quelconque des revendications 1 à 4, caractérisé en ce qu'il comprend les étapes suivantes :

1ère étape : Synthèse du R(+) chloro 2 propanoate d'éthyle par action du pentafluorure de phosphore sur le S(-) lactate d'éthyle.

2ème étape : Synthèse du R(-) chloro 2 propanol par action de l'hydrure double de lithium et d'aluminium sur le produit obtenu à la première étape.

3ème étape : Synthèse du 4 hydroxybenzoate de R(-) chloro 2 propyle par action du composé obtenu à la deuxième étape sur l'acide 4 hydroxybenzoïque en utilisant une catalyse acide.

4ème étape : Chloruration de l'acide 4n (alkyloxy ou alkyloxyphényl) benzoïque par action du chlorure de thionyle ou d'oxalyle.

5ème étape : Synthèse du [4n alkyloxy ou alkyloxyphényl] benzoate de R(-) chloro 2 propyloxyphényle par réaction entre les produits obtenus à l'issue des troisième et quatrième étapes.

# FIG_1

| N° | m | n | K | $S_3$ | $S_C^*$ | $S_A$ | I |
|---|---|---|---|---|---|---|---|
| $A_1$ | 1 | 10 | X 63 | — | — | X 68 | X |
| $A_2$ | 2 | 8 | X 58 | — | X [72] mp: 104 | X 194 | X |
| $A_3$ | 2 | 6 | X 68 | X [79] | X [86] mp: 112 | X 203 | X |

# FIG_2

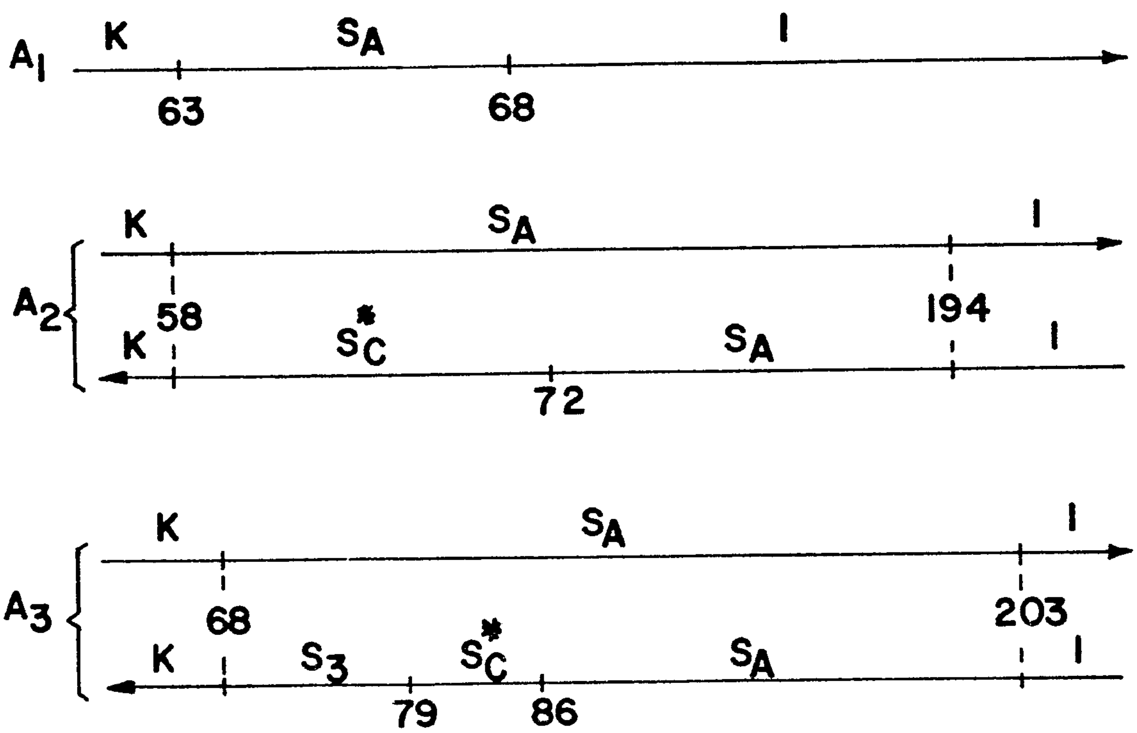

FIG_3

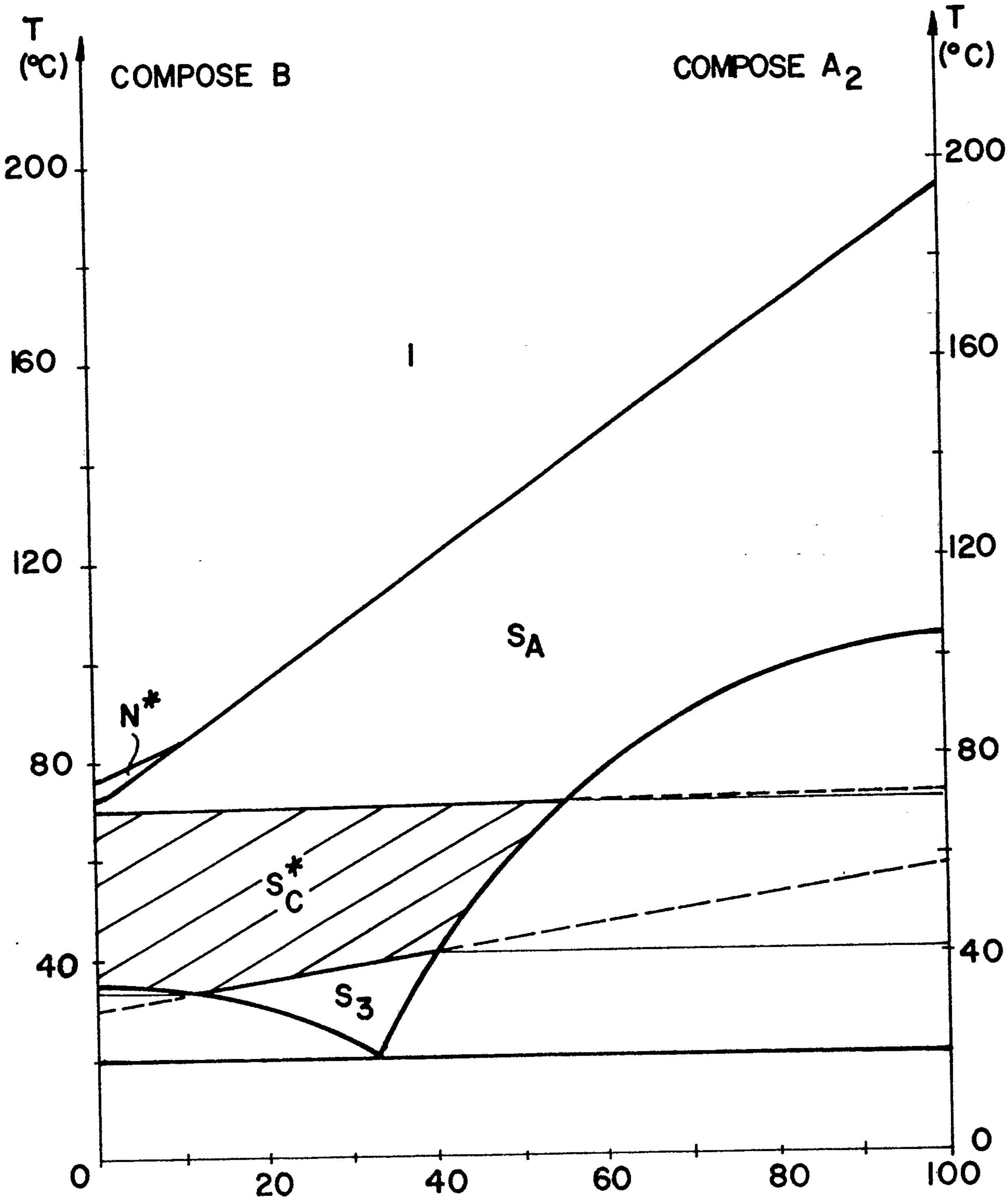
T
(°C)
COMPOSE B
COMPOSE A2
T
(°C)
200
160
120
80
40
200
160
120
80
40
0
I
SA
N*
SC*
S3
0
20
40
60
80
100

FIG_4

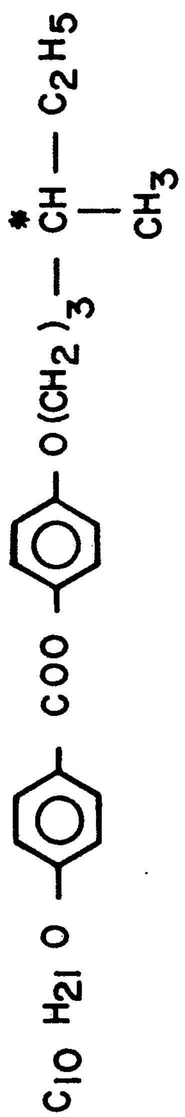

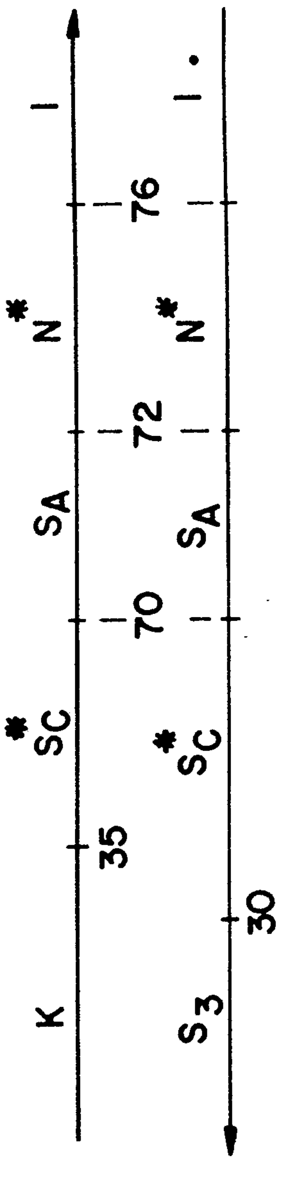

Office européen des brevets

# RAPPORT DE RECHERCHE EUROPEENNE

Numéro de la demande

EP 87 40 0404

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 115 693 (CHISSO)<br>* Page 4, lignes 1-11; page 4, lignes 15-25; page 5, lignes 1-25; exemples 1,2,23,24-28; revendications 1-16 *<br>--- | 1-5 | C 09 K 19/20<br>C 09 K 19/02 |
| Y | EP-A-0 136 725 (CHISSO)<br>* Page 8, lignes 18-26; page 9, lignes 1-25; page 10; revendications 1-6 *<br>----- | 1-5 | |

| DOMAINES TECHNIQUES RECHERCHES (Int. Cl.4) |
|---|
| C 09 K |

Le présent rapport de recherche a été établi pour toutes les revendications

| Lieu de la recherche | Date d'achèvement de la recherche | Examinateur |
|---|---|---|
| LA HAYE | 15-06-1987 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82